# Europäisches Patentamt

## European Patent Office

## Office européen des brevets

(19)

(11) Veröffentlichungsnummer: **0 051 263**
**B1**

(12) # EUROPÄISCHE PATENTSCHRIFT

(45) Veröffentlichungstag der Patentschrift:
**15.01.86**

(51) Int. Cl.⁴: **B 23 B 29/04**

(21) Anmeldenummer: **81109083.6**

(22) Anmeldetag: **28.10.81**

(54) Schnellwechsel-Werkzeughalter für Drehmaschinen.

(30) Priorität: **03.11.80 DE 8029160 U**

(43) Veröffentlichungstag der Anmeldung:
**12.05.82 Patentblatt 82/19**

(45) Bekanntmachung des Hinweises auf die Patenterteilung:
**15.01.86 Patentblatt 86/3**

(84) Benannte Vertragsstaaten:
**AT CH DE FR GB IT LI SE**

(56) Entgegenhaltungen:
**DE-A-1 939 132**
**DE-A-2 150 518**

(73) Patentinhaber: **PITTLER Maschinenfabrik AG, Pittlerstrasse, D-6070 Langen (DE)**

(72) Erfinder: **Dietz, Peter, Platanenstrasse 11, D-6081 Büttelborn (DE)**
Erfinder: **Müller, Norbert W., Schaumburger Strasse 17, D-6230 Frankfurt 80 (DE)**
Erfinder: **Kroh, Horst F.M.,, Gartenstrasse 56, D-6070 Langen (DE)**

(74) Vertreter: **Beyer, Werner, Dipl.Ing., Patentanwälte Beyer & Jochem Staufenstrasse 36, D-6000 Frankfurt / Main (DE)**

EP 0 051 263 B1

**Beschreibung**

Die Neuerung bezieht sich auf einen Schnellwechsel-Werkzeughalter für Drehmaschinen, bestehend aus einem Grundhalter und einem das Werkzeug aufnehmenden Wechseleinsatz, die relativ zueinander auf prismatischen oder runden Führungen durch Anlage gegen einen verstellbaren Anschlag positionierbar und mittels einer Klemmeinrichtung senkrecht zur Führungsebene verspannbar sind, wobei die Betätigungselemente für die Klemmeinrichtung im Wechseleinsotz angeordnet sind.

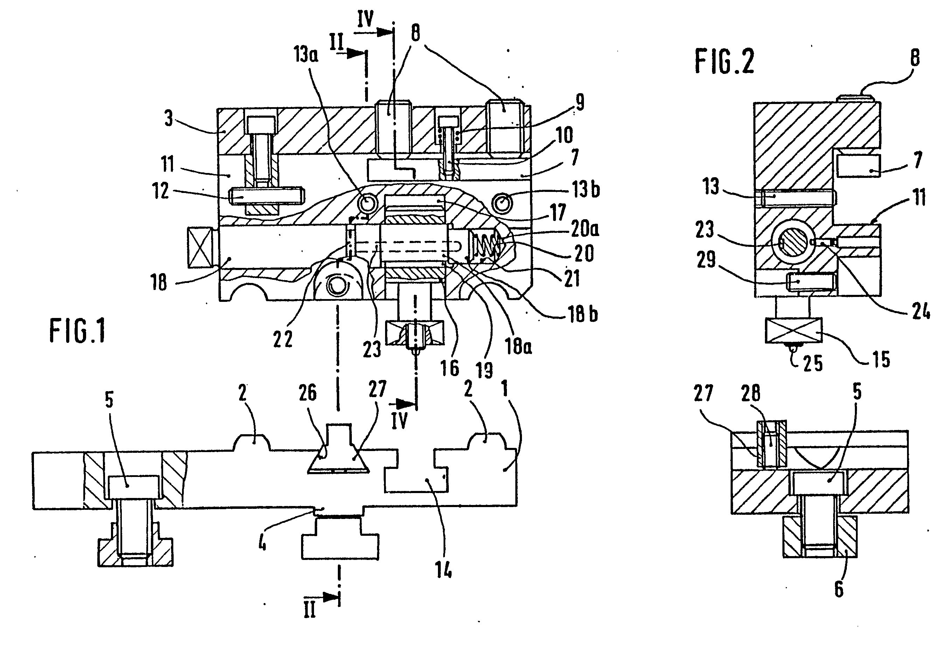

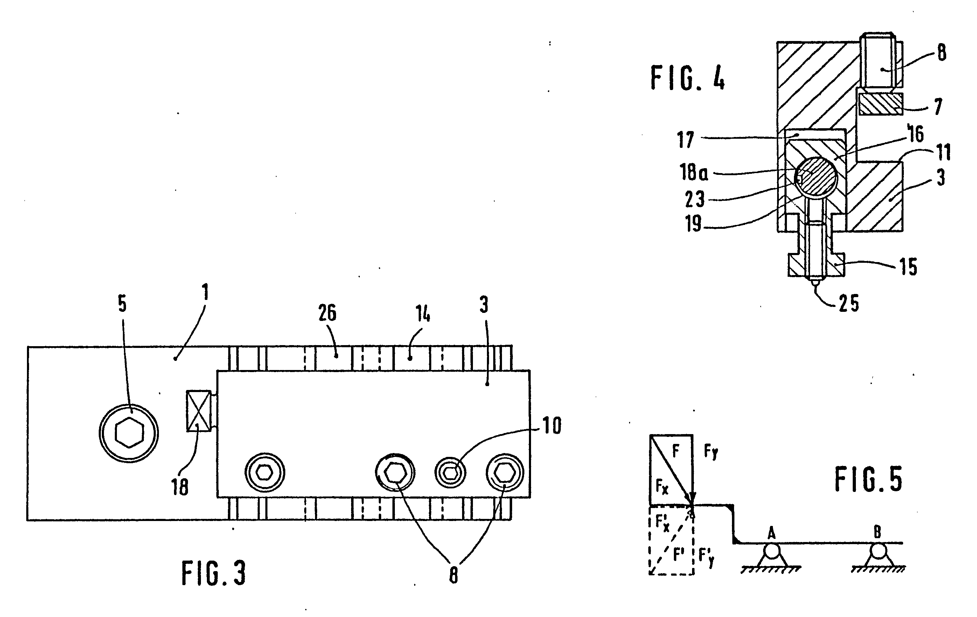

Aus der DE-OS 27 45 402 ist ein derartiger Werkzeughalter bekannt, bei welchem in Abhängigkeit von der Anwendungsart für ein Einstechwerkzeug (Fig. 1-3) oder ein Plandrehwerkzeug (Fig. 4-6) nur eine Verstellrichtung oder zwei Verstellrichtungen vorgesehen sind, wobei im letzteren Fall die erforderlichen Verstell, und Klemmittel identisch ausgebildet, also ebenfalls doppelt vorhanden sind. Dies bedeutet, daß anstelle eines Wechseleinsatzes ebenfalls zwei auswechselbare Halteteile für das Werkzeug mit identischen Führungsund Klemmitteln erforderlich werden. Dies hat eine erhebliche Verteuerung zur Folge und erfordert beim Anwender doppelte Lagerhaltung.

Aus diesen Gründen verzichtet man beispielsweise bei Werkzeugen für Mehrspindel-Drehautomaten auf die doppelte Verstellbarkeit und sieht nur eine Verstellebene vor, die so angeordnet ist, daß durch eine Anschlagschraube die Drehhöhe eingestellt werden kann (Spur, MEHRSPINDEL-DREHAUTOMATEN, Carl Hanser Verlag, München, Seite 173). Dieser allgemein üblichen Anordnung der Führungsebene haftet der Nachteil an, daß eine Einstellung der Werkstückmaße nicht möglich ist.

Der aus der DE-OS 27 45 402 vorbekannte Schnellwechsel-Werkzeughalter weist auch eine im Wechseleinsatz angeordnete schraubenbetätigte Klemmeinrichtung (Figuren 2, 3, 7, 8, 9) auf.

An einer axial feststehenden Betätigungsschraube sind in axial getrennten Bereichen gegenläufige Gewinde ausgebildet, die in undrehbar im Wechselhalter geführte Spannbacken eingreifen, welche demgemäß beim Betätigen der Schraube aufeinanderzuoder voneinanderwegbewegt werden. An den Spannseiten dieser Spannbacken sind Keilflächen ausgebildet, die entsprechend ausgebildete Keilflächen eines in einer T-Nut des Grundhalters verschieblich angeordneten Nutensteins erfassen und dadurch den Wechseleinsatz gegenüber dem Grundhalter zu verspannen vermögen. Diese Ausbildung ermöglicht durch entsprechend weites Zurückstellen der Spannbacken, daß der Wechseleinsatz nicht nur in Richtung der Führungen, sondern auch senkrecht zur Führungsebene entfernt werden kann, was im Hinblick auf die engen Platzverhältnisse im Arbeitsraum von z.B. Mehrspindel-Drehautomaten einen erheblichen Vorteil darstellt. Jedoch ist diese Ausbildung der Spanneinrichtung sehr aufwendig und die Funktion der Klemmeinrichtung ist dann nicht gewährleistet, wenn der Nutenstein im Grundhalter verschieblich angeordnet ist, da bei aufgesetztem Wechselhalter der Nutenstein nicht mehr zu sehen ist und somit der exakte Angriff der Spannbacken am Stein nicht überwacht werden kann. Dies erfordert die Verwendung sehr langer und damit teuerer Nutensteine, oder es muß stattdessen ein mit dem Grundhalter einstückig ausgebildeter langer Steg mit schrägen Spannflächen vorgesehen werden.

Ein weiterer Nachteil der bekannten Klemmeinrichtung besteht darin, daß die Spannschraube quer zur Längsachse des Halters im Wechseleinsatz angeordnet ist. Müssen auf einem plattenförmigen Grundhalter mehrere Wechseleinsätze eng nebeneinander angeordnet werden, dann ist der Zugang zur Klemmeinrichtung der meisten Wechseleinsätze versperrt, und es müssen erst die benachbarten Wechseleinsätze entfernt werden, bevor die Klemmung eines inneren Einsatzes gelöst werden kann.

In der DE-OS 27 45 402 wird, vermutlich um diesen Nachteil zu beseitigen, auch noch vorgeschlagen (Fig. 6), die Klemmung von oben her zu betätigen, wobei mittels einer sich gegen die Oberseite des Wechseleinsatzes abstützenden Schraube ein im Gewindeeingriff mit dieser stehendes Spannelement verschoben wird, das über eine schwalbenschwanzförmige Ausnehmung am unteren Ende den im Grundhalter angeordneten und den mit entsprechenden Keilflächen versehenen Nutenstein erfaßt. Dieser Lösung haftet der Nachteil an, daß der Wechseleinsatz nach dem Lösen der Schraube entweder ebenfalls in Richtung der Führungsebene verschoben werden muß, um das Spannelement vom Nutenstein zu trennen, oder der Wecheleinsatz nach Lösen der Spannschraube oder einer radial geschlitzten Unterlegscheibe vom Spannelement abgehoben werden muß, was große Mühe beim Wiederaufsetzen bereitet.

Beide Ausgestaltungsformen der Klemmeinrichtung bei der DE-OS 27 45 402 haben außerdem den Nachteil, daß beim Aufsetzen des Wechseleinsatzes auf den Grundhalter der exakte Eingriff zwischen Spannelement und Nutenstein nicht visuell überwachbar ist und auch nicht durch eine lange Ausbildung des Nutensteins hergestellt werden kann, denn ein langer Nutenstein erfordert ein entsprechend langes Verschieben des Wechselhalters vor dem Abheben. Darüber hinaus wirkt sich nachteilig aus, daß die Verschieberichtung von der Drehspindel weg durch den Anschlag blockiert ist, so daß der Wechseleinsatz beim Entfernen immer zur Drehspindel hin geschoben werden muß.

Der Neuerung liegt die Aufgabe zugrunde, bei einem Schnellwechsel-Werkzeughalter der eingangs genannten Art mit nur einer Führungsebene, in der ein oder mehrere prismatische oder runde Führungen vorgesehen sind, diese so anzuordnen, daß eine für alle Einsatzarten ausreichende Einstellbarkeit des Werkzeuges ermöglicht wird. Außerdem soll die Klemmeinrichtung dahingehend verbessert werden, daß die Nachteile der bekannten Werkzeughalter vermieden werden und bei nur kurzem Betätigungsweg ein unmittelbares Lösen sowohl in Richtung der Führungsmittel als auch senkrecht zur Führungsebene erfolgen kann.

Die lösung dieser Aufgabe erfolgt neuerungsgemäß dadurch, daß die Führungen parallel zur Aufspannfläche des Grundhalters auf dem Werkzeugschlitten und rechtwinkelig zur Hauptvorschubrichtung angeordnet sind, daß die Klemmeinrichtung, einen Exzenterbolzen aufweist, der eine Bohrung in einem Spannstück durchragt, und daß der Exzenterbolzen im Wechseleinsatz sowohl drehbar als auch in Hauptvorschubrichtung axial verschiebbar gelagert ist und aus einer Wirkungsstellung in eine wirkungslose Stellung verschiebbar ist, in welcher er das im Grundhalter in einer T-Nut mittels eines Nutensteins verschiebliche Spannstück freigibt, so daß der Wecheleinsatz senkrecht zur Führungsebene abnehmbar ist.

Die Neuerung geht davon aus, daß ein Schnellwechsel-Werkzeughaltesystem für eine Drehmaschine an sich drei Verstellrichtungen erfordert, nämlich die x-Richtung für die Durchmessereinstellung, die y-Richtung für die Höheneinstellung (Drehhöhe) und die z-Richtung für die Längeneinstellung. Ordnet man alle drei Verstelleinrichtungen im Werkzeughalter an, was technisch durchaus möglich ist - es sind bereits Lösungen mit vierfacher Verstellung bekanntgeworden, wobei auch eine Schwenkbewegung berücksichtigt ist -, so ergeben sich so hohe Kosten, daß der Einsatz dieser Werkeughalter nur in Ausnahmefällen wirtschaftlich vertretbar ist. Für ein Schnellwechsel-Werkzeughaltesystem, das als Normalzubehör für eine Drehmaschine angeboten werden muß, sind diese Lösungen in jedem Falle unwirtschaftlich. Die Neuerung geht deshalb von der Überlegung aus, daß es sinnvoller ist, eine dieser Verstellmöglichkeiten in die Drehmaschine selbst zu verlegen, und zwar die Positionierung des Grundhalters in Vorschubrichtung beispielsweise unter Verwendung von wegbegrenzenden Anschlägen für den Vorschubschlitten, die Ausbildung eines Schlittens mit einstellbarem Oberteil oder die Anordnung von verstellbaren Anschlägen für den Grundhalter auf dem Schlitten. Hieraus ergibt sich, daß dann im Werkzeughalter nur eine Verstellmöglichkeit quer zur Vorschubrichtung ausreichend ist, um dennoch eine Verstellung in zwei Richtungen (x- und z-Richtung) zu gewährleisten. Der sich daraus ergebende wirtschaftliche Vorteil die in der Maschine angeordnete Verstellmöglichkeit für alle Werkzeughalter nutzbringend heranzuziehen, ist evident.

Als weiterer Vorteil ergibt sich, daß der neuerungsgemäße Schnellwechsel-Werkzeughalter nicht nur bei mechanisch oder hydraulisch betätigten Drehmaschinen, insbesondere Mehrspindel-Drehautomaten anwendbar ist, sondern aufgrund seiner wirtschaftlichen Vorteile z.B. auch bei numerisch gesteuerten Drehmaschinen eingesetzt werden kann. Damit ist eine generelle Anwendbarkeit gegeben, die die wirtschaftliche Bedeutung weiter unterstreicht.

Hervorzuheben ist ferner, daß sich durch die Beschränkung auf nur eine Verstellrichtung, die Anordnung der Führungsrichtung quer zur Vorschubrichtung und die besondere Ausbildung der Klemmeinrichtung mehrere Vorteile gleichzeitig einstellen:

- die Wechseleinsätze können eng nebeneinander positioniert werden;
- der Exzenterbolzen zum Lösen und Klemmen ist jederzeit zugänglich;
- jeder Wechseleinsatz kann unabhängig von weiteren Einsätzen auf einfachem Wege senkrecht zur Führungsebene entfernt und in dieser Richtung wieder aufgesetzt werden;
- es ist stets eine einwandfreie Klemmung gewährleistet, da der Exzenterbolzen das Spannstück durchdringt und somit unabhängig von der Verschiebbarkeit des Spannstücks immer eine eindeutige räumliche Zuordnung dieser Teile zueinander gewährleistet.

Gegenüber dem Stand der Technik (DE-AS 16 27 007) mit Anordnung des Exzenterbolzens im Grundhalter ergibt sich der weitere Vorteil, daß der Kraftangriffspunkt der Klemmkraft durch die unveränderliche Lage des Exzenters im Wechseleinsatz exakt definiert ist, während er sich beim Stande der Technik mit der Verstellung des Wechseleinsatzes verändert. Der neuerungsgemäße Werkzeughalter erlaubt deshalb auch wesentlich größere Verstellwege..

Bei einem Schnellwechsel-Werkzeughalter gemäß der Neuerung mit zwei in Hauptvorschubrichtung beabstandeten prismatischen oder runden Führungen ergibt sich eine erste vorteilhafte Ausgestaltung dadurch, daß die T-Nut mit dem Nutenstein des Spannstücks derart asymmetrisch zwischen den beiden Führungen angeordnet ist, daß sie näher an der der Werkzeugschneide benachbarten Führung als der anderen Führung verläuft. Durch diese Ausgestaltung ist es möglich, bei Verwendung nur einer einzigen derartigen Klemmeinrichtung dennoch die vom Angriff des Drehmeißels am Werkstück herrührenden Kippmomente sicher aufzufangen und auf dem Grundhalter zu übertragen.

Nach einem anderen Ausgestaltungsmerkmal der Neuerung ist der Exzenterbolzen in Axialrichtung so federbelastet, daß er nach dem Lösen der Exzenterverspannung selbsttätig in Axialrichtung verschoben wird. Dadurch wird der Zustand der Klemmeinrichtung nach außen sichtbar angezeigt.

Eine besondere Ausgestaltung der neuerungsgemäßen Klemmeinrichtung ergibt sich ferner dadurch, daß der Exzenterbolzen eine Axialnut und eine an das eine Ende derselben anschließende Radialnut aufweist, in die ein im Wechseleinsatz angeordnetes Führungsmittel in Gestalt einer Schraube oder eines Stiftes eingreift. Auf diesem Wege wird verhindert, daß der Exzenterbolzen verlorengeht.

Ein Ausführungsbeispiel des neuerungsgemäßen Schnellwechsel-Werkzeughalters wird nachstehend in Verbindung mit der Zeichnung näher erläutert. Es zeigen:

Fig. 1: in voneinander getrennter Darstellung und teilweise im Schnitt eine Seitenansicht des Grundhalters und des Wechseleinsatzes des Schnellwechsel-Werkzeughalters,

Fig. 2: einen Schnitt durch den Grundhalter und den Wechseleinsatz nach Linie II-II-in Fig. 1,

Fig. 3: eine Draufsicht auf den montierten Schnellwechsel-Werkzeughalter,

Fig. 4: einen Schnitt durch den Wechseleinsatz nach IV-IV in Fig. 1 und

Fig. 5: eine Darstellung der Momentverhältnisse bei Vorkopf- und Überkopfbearbeitung.

Die Zeichnung zeigt einen Grundhalter 1 mit zwei Rundführungen 2 und einen darauf anbringbaren Wechseleinsatz 3. Der Grundhalter 1 ist als Platte ausgebildet und weist einen Ansatz 4 auf, mit dem er in eine Nut eines Schlittens einer Drehmaschine eingesetzt und mittels Schrauben 5 und Nutensteinen 6 befestigt werden kann.

Das (nicht gezeigte) Werkzeug, nämlich ein Drehmeißel,wird im Wechseleinsatz 3 über eine Druckplatte 7 mittels Spannschrauben 8 in bekannter Weise eingespannt. Die Druckplatte 7 ist im Wechseleinsatz 3 über eine durch eine Feder 9 belastete Schraube 1o so gehalten, daß sie ständig an den Spannschrauben 8 anliegt und somit ein unbehindertes Auswechseln des Werkzeugs ermöglicht. Die Position des Werkzeugs im Werkzeugkanal 11 kann durch Einstellschrauben 12 und 13 (13a, 13b) justiert werden.

In einer Nut 14 des Grundhalters 1, die T- oder schwalbenschwanzförmig ausgebildet sein kann, ist ein Nutenstein 15 verschieblich eingesetzt, der mit einem zylindrischen Fortsatz 16 in eine Bohrung 17 des Wechseleinsatzes 3 eingreift und ein Standstück bildet. Parallel zum Werkzeugkanal 11 ist im wechseleinsatz 3 ein Exzenterbolzen 18 gelagert, der mit seinem exzentrischen Teil 18a eine Bohrung 19 im Fortsatz 16 des Nutensteins 15 durchsetzt und mit einem im Durchmesser kleineren zylindrischen Endteil 18b im Wechseleinsatz 3 gelagert ist.

An dem Exzenterbolzen 18 greift stirnseitig eine Druckfeder 20 an, die an ihrer anderen Stirnseite 2oa in der den Endteil 18b des Exzenterbolzens 18 aufnehmenden Bohrung 21 in geeigneter Weise, z.B. durch Kleben, befestigt ist. Der Exzenterbolzen 18 enthält eine Umfangsnut 22 und eine Axialnut 23, die mit ihrem einen Ende in die Umfangsnut 22 mündet, sich durch den exzentrischen Teil 18a erstreckt und vor dem dortigen Ende stirnseitig geschlossen ist. In der Wirkstellung des Exzenterbolzens greift eine im Wechseleinsatz angeordnete Schraube 24 in die Umfangsnut 22 ein, so daß der Exzenterbolzen 18 in dieser Stellung nur verdreht, jedoch nicht axial verschoben werden kann. Durch das Verdrehen wird der Wechseleinsatz 3 mit dem Grundhalter 1 geklemmt oder die Klemmung gelöst. Wird der Exzenterbolzen 18 beim Lösen soweit gedreht, daß die Schraube 24 vor die Axialnut 23 gelangt, dann wird der Exzenterbolzen 18 unter der Wirkung der Feder 20 selbsttätig in eine aus dem Wechseleinsatz stärker vorstehende Stellung verschoben. Der Exzenterbolzen 18 nimmt somit im gelösten Zustand immer eine von außen erkennbare Stellung ein, die dem Einrichter die Lösestellung signalisiert. Die Nut 23 ist so lang ausgebildet, daß der Fortsatz 16 des Nutensteins freigegeben wird, wenn der Exzenterbolzen 18 in die äußerste Position herausgezogen ist. In dieser Position kann der Wechseleinsatz 3 senkrecht zu den Rundführungen 2 vom Grundhalter 1 abgehoben werden. Damit der Nutenstein 15 nicht verlorengeht, ist in seiner Grundfläche ein federbelasteter Klemmbolzen 25 in bekannter Weise angeordnet, der den Nutenstein reibungsschlüssig in der T-Nut 14 sichert.

Im Grundhalter 1 ist eine weitere, vorzugsweise schwalbenschwanzförmige Nut 26 quer zur Vorschubrichtung ausgebildet, in der ein Anschlag 27 mittels Gewindestift 28 festgeklemmt ist. Gegen diesen Anschlag 27 ist der Wechseleinsatz 3 mittels einer Einstellschraube 29 justierbar.

In Fig. 5 sind die Belastungsverhältnisse unter der Einwirkung der Zerspanungskraft F dargestellt, die in die Komponenten $F_x$ und $F_y$ zerlegt wird. Die Kräfte bei der Überkopfbearbeitung sind gestrichelt eingezeichnet und durch Apostroph gekennzeichnet. Bildet man für den Normalfall der Vorkopf-Bearbeitung die Momente um den Lagerpunkt A, der der drehspindelseitigen Rundführung entspricht, so erkennt man, daß die Wirkungsrichtungen der Kräfte $F_x$ und $F_y$ entgegengesetzt zueinander sind und demgemäß im Lagerpunkt B eine verhältnismäßig geringe Auflagerkraft hervorrufen. Betrachtet man hingegen für den Fall der Überkopfbearbeitung die Momente der Kräfte $F'_x$ und $F'_y$ um den Punkt B, so ergibt sich für die Auflagerkräfte in A, daß beide Kraftwirkungen gleichgerichtet sind und sich demgemäß addieren. Daraus wird ersichtlich, daß im Lagerpunkt A eine höhere Klemmkraft aufzubringen ist als in B. Ausgehend von dieser Überlegung ist die Aufnahmenut 14 für den Nutenstein 15 nicht mittig zwischen den Rundführungen angeordnet, sondern näher in Richtung zum Ort der Zerspanung verlagert, wie diese aus den Figuren 1 und 3 erkennbar ist.

## Patentansprüche

1. Schnellwechsel-Werkzeughalter für Drehmaschinen, bestehend aus einem Grundhalter (1) und einem das Werkzeug aufnehmenden Wechseleinsatz (3), die relativ zueinander auf prismatischen oder runden Führungen (2) durch Anlage gegen einen verstellbaren Anschlag (27) positionierbar und mittels einer Klemmeinrichtung (15, 16, 18) senkrecht zur Führungsebene verspannbar sind, wobei die Betätigungselemente für die Klemmeinrichtung im Wechseleinsatz angeordnet sind, dadurch gekennzeichnet, daß die Führungen (2) parallel zur Aufspannfläche des Grundhalters (1) auf dem Werkzeugschlitten und rechtwinkelig zur Hauptvorschubrichtung angeordnet sind, daß die Klemmeinrichtung einen Exzenterbolzen (18) aufweist, der eine Bohrung (19) in einem Spannstück (15, 16) durchragt, und daß der Exzenterbolzen (18) im Wechseleinsatz (3) sowohl drehbar als auch in Hauptvorschubrichtung axial verschiebbar gelagert ist und aus einer Wirkungsstellung in eine wirkungslose Stellung verschiebbar ist, in welcher er das im Grundhalter (1) in einer T-Nut (14) mittels eines Nutensteins (15) verschiebliche Spannstück (15, 16) freigibt, so daß der Wechseleinsatz (3) senkrecht zur Führungsebene abnehmbar ist.

2. Schnellwechsel-Werkzeughalter nach Anspruch 1 mit zwei in Hauptvorschubrichtung beabstandeten prismatischen oder runden Führungen, dadurch gekennzeichnet, daß die T-Nut (14) mit dem Nutenstein (15) des Spannstücks (15, 16) derart asymmetrisch zwischen den beiden Führungen (2) angeordnet ist, daß sie näher an der der Werkzeugschneide benachbarten Führung als der anderen Führung verläuft.

3. Schnellwechsel-Werkzeughalter nach Anspruch 1 oder 2, dadurch gekennzeichnet. daß der Exzenterbolzen (18) in Axialrichtung so federbelastet ist, daß er nach dem Lösen der Exzenterverspannung selbsttätig in Axialrichtung verschoben wird.

4. Schnellwechsel-Werkzeughalter nach Anspruch 3, dadurch gekennzeichnet, daß der Exzenterbolzen (18) in der Wirkstellung gegen axiales Verschieben gesichert ist.

5. Schnellwechsel-Werkzeughalter nach Anspruch 4, dadurch gekennzeichnet, daß der Exzenterbolzen (18) eine Axialnut (23) und eine an das eine Ende derselben anschließende Radialnut (22) aufweist, in die ein im Wechseleinsatz (3) angeordnetes Führungsmittel in Gestalt einer Schraube (24) oder eines Stiftes eingreift.

6. Schnellwechsel-Werkzeughalter nach Anspruch 5, dadurch gekennzeichnet, daß die Axialnut (23) im Exzenterbolzen (18) stirnseitig geschlossen ist.

## Claims

1. A quick-change tool holder for lathes comprising a basic holder (1) and a changeable insert (3) for receiving the tool, which can be positioned relative to one another on prismatic or round guides (2) by abutment against an adjustable stop member (27) and can be braced perpendicularly to the guide plane by means of a clamping device (15, 16, 18), wherein the actuating elements for the clamping device are arranged in the changeable insert, characterised in that the guides (2) are disposed parallel to the mounting face of the basic holder (1) on the tool carriage and at right angles to the main feed direction, in that the clamping device has an eccentric pin (18) which projects through a bore (19) in a clamping member (15, 16), in that the eccentric pin (18) is mounted in the changeable insert (3) so as to be both rotatable and axially displaceable in the main feed direction and can be shifted from an operative position into an inoperative position in which it releases the clamping member (15, 16) which is displaceable in the basic holder (1) in a T-slot by means of a slot block (15), so that the changeable insert (3) can be removed perpendicularly to the guide plane.

2. A quick-change tool holder according to Claim 1 with two prismatic or round guides spaced apart in the main feed direction, characterised in that the T-slot (14) with the slot block (15) of the clamping member (15, 16) is so arranged asymmetrically between the two guides (2) that it extends closer to the-guide adjacent the tool cutting edge than the other guide.

3. A quick-change tool holder according to Claim 1 or 2, characterised in that the eccentric pin (18) is so spring-loaded in axial direction that, after the releasing of the eccentric bracing action, it is automatically displaced in axial direction.

4. A quick-change tool holder according to Claim 3, characterised in that in the operative position the eccentric pin (18) is secured against axial displacement.

5. A quick-change tool holder according to Claim 4, characterised in that the eccentric pin (18) has an axial groove (23) and, adjacent one end thereof, a radial groove (22) in which engages guide means in the form of a screw (24) or pin provided in the changeable insert (3).

6. A quick-change tool holder according to Claim 5, characterised in that the axial groove (23) in the eccentric pin (18) is closed at the front end.

## Revendication

1. Porte-outil à échange rapide pour tours, comprenant une embase (1) et un support interchangeable (3) destiné à recevoir l'outil, lesquels peuvent être d'une part positionnés par rapport l'un à l'autre sur des éléments de guidage à section prismatique ou arrondie (2) en venant porter contre une butée réglable (27), et d'autre part bloqués perpendiculairement au plan de guidage grâce à un dispositif de serrage (15, 16, 18), les organes d'actionnement de ce dispositif de serrage étant logés dans ledit support interchangeable (3), ce porte-outil étant caractérisé par le fait que les éléments de guidage (2) sont orientés parallèlement aux surfaces de blocage de l'embase (1) sur les coulisseaux porte-outil et à angle droit par rapport à la direction principale d'avance de l'outil, que le dispositif de serrage comprend un axe excentrique (18) qui traverse un alésage (19) formé dans une pièce de serrage (16, 16), et que l'axe excentrique (18) est monté dans le support interchangeable (3) tant en rotation qu'en coulissement axial dans ladite direction principale d'avance, et peut aussi coulisser entre une position active et une position inactive dans laquelle il libère ladite pièce de serrage (15, 16) montée coulissante grâce à un coulisseau (15) dans une gorge (14) à section en T prévue dans l'embase (1), de manière à permettre l'enlèvement du support interchangeable (3) perpendiculairement au plan de guidage.

2. Porte-outil à échange rapide pour tours selon la Revendication 1, comportant deux éléments de guidage à section prismatique ou arrondie, orientés dans la direction de l'avance principale de l'outil, caractérisé par le fait que la gorge en T (14) dans laquelle s'engage le coulisseau (15) de la pièce de serrage (15, 16) est disposée de façon asymétrique entre les deux éléments de guidage (2), afin d'être plus proche de l'élément de guidage adjacent au tranchant de l'outil que l'autre élément de guidage.

3. Porte-outil à échange rapide pour tours selon l'une ou l'autre des Revendications 1 et 2, caractérisé en ce que l'axe excentrique (18) est sollicité par un ressort (20) dans le sens axial, de façon qu'après la libération du blocage de l'axe excentrique celui-ci coulisse automatiquement dans le sens axial,

4. Porte-outil à échange rapide pour tours, selon la Revendication 3, caractérisé en ce que ledit axe excentrique (18) est empeché positivement d'effectuer tout mouvement de coulissement axial lorsqu'il est dans sa position active,

5. Porte-outil à échange rapide pour tours, selon la Revendication 4, caractérisé en ce que ledit axe excentrique (18) est pourvu d'une gorge axiale (23) et d'une gorge radiale (22) qui débouche dans une extremité de la gorge axiale, et dans laquelle s'engage un organe de guidage sous forme d'une vis ou goupille (24) disposée dans ledit support interchangeable (3);

6. Porte-outil à echange rapide pour tours, selon la Revendication 5, caractérisé en ce que la gorge axiale (23) est fermée, dans l'axe excentrique (18), à son extrémité située du côté avant ou interieur de cet axe.

FIG.1

FIG.2

0 051 263

FIG. 4

FIG. 3

FIG. 5

0 051 263